# EUROPEAN PATENT APPLICATION

(11) **EP 4 715 985 A1**
(43) Date of publication of application: **25.03.2026**
(21) Application number: 24217278.1
(22) Date of filing: 03.12.2024
(51) Int. Cl.: H01M 50/249, H01M 50/342

(54) **BATTERY PACK EXPLOSION-PROOF STRUCTURE, BATTERY PACK, AND ELECTRIC VEHICLE**

(30) Priority: 23.09.2024 WO PCT/CN2024/120390
(71) Applicant: Eve Energy Co., Ltd., Huizhou, Guangdong 516006 (CN)
(72) Inventor: XIE, Hongyao, Huizhou 516006 (CN)
(74) Representative: HGF

(57) **Abstract**

Provided are a battery pack explosion-proof structure, a battery pack, and an electric vehicle. The battery pack explosion-proof structure includes a bottom cover plate (10) and an explosion-proof valve (20). The bottom cover plate (10) includes a cover plate body (11) and an exhaust pipe (12) that are integrally formed. The exhaust pipe (12) is disposed on a side of the cover plate body (11) and extends in a direction away from the cover plate body (11). The gas inlet (121) of the exhaust pipe (12) is opened in the cover plate body (11). The explosion-proof valve (20) is connected to a side of the cover plate body (11) away from the exhaust pipe (12). A valve port (21211) of the explosion-proof valve (20) is directly opposite to the gas inlet (121) or is connected into the exhaust pipe (12).

## Description

### TECHNICAL FIELD

The present application relates to the field of battery technologies, for example, a battery pack explosion-proof structure, a battery pack, and an electric vehicle.

### BACKGROUND

An explosion-proof valve for a battery pack is an important safety component in the battery pack. For an electric vehicle, if the explosion-proof valve in the related art is mounted at the bottom of a battery housing, the battery pack needs to be assembled to the chassis of the vehicle, and an exhaust member of the explosion-proof valve is connected to the chassis of the vehicle. For example, the exhaust member is engaged with the chassis, the explosion-proof valve is typically assembled blindly (an engaging structure of the chassis is not visible during the assembly). An operator roughly locates the engaging structure and fixes the exhaust member and the engaging structure inserted into the chassis.

In the preceding related art, most exhaust members are made of plastic. Therefore, during the assembly, the exhaust member is very prone to be bumped and even damaged. Additionally, in transportation, transferring, and loading processes, the exhaust member is also prone to be damaged. Besides, the position of the exhaust member is concealed and is less prone to be noticed, so a failure of the explosion-proof valve easily leads to a safety hazard.

### SUMMARY

An embodiment of the present application provides a battery pack explosion-proof structure. The battery pack explosion-proof structure includes a bottom cover plate and an explosion-proof valve.

The bottom cover plate includes a cover plate body and an exhaust pipe, the cover plate body and the exhaust pipe are integrally formed, the exhaust pipe is disposed on a side of the cover plate body and extends in a direction away from the cover plate body, and a gas inlet of the exhaust pipe is opened in the cover plate body.

The explosion-proof valve is connected to a side of the cover plate body away from the exhaust pipe, and a valve port of the explosion-proof valve is directly opposite to the gas inlet or is connected to the exhaust pipe.

An embodiment of the present application further provides a battery pack. The battery pack includes the battery pack explosion-proof structure in any embodiment, and the battery pack explosion-proof structure is located at a lower portion of the battery pack.

An embodiment of the present application further provides an electric vehicle. The electric vehicle includes a chassis and the battery pack in any embodiment, the battery pack is mounted to the chassis, and a free end of an exhaust pipe is inserted through the chassis and disposed on a side of the chassis away from the battery pack.

Some embodiments of the present application provide the battery pack explosion-proof structure. The exhaust pipe and the cover plate body are integrally formed into the bottom cover plate, which means that a relatively long exhaust structure mounted to the explosion-proof valve in the related art is integrated into the bottom cover plate. That is, the exhaust pipe and the cover plate body are made of the same material, generally a metal material. In the mounting process of the battery pack explosion-proof structure, the explosion-proof valve is mounted on the cover plate body first so that the valve port of the explosion-proof valve is directly opposite to or is connected into the exhaust pipe. Then, the bottom cover plate mounted with the explosion-proof valve is mounted to the chassis of the vehicle. In the mounting process, the exhaust pipe is made of a harder material and therefore is less prone to deformation when bumping against the chassis. Thus, the exhaust pipe is less prone to be damaged in the mounting process, thereby improving mounting reliability. In addition, it can be ensured that the explosion-proof valve discharges gas smoothly after failing, thereby improving safety performance.

Some embodiments of the present application further provide the battery pack. The battery pack includes the battery pack explosion-proof structure in any embodiment, and the battery pack explosion-proof structure is located at a lower portion of the battery pack. The battery pack adopts the preceding battery pack explosion-proof structure so that an exhaust structure is less prone to be damaged in the mounting process. When the gas overflows in the battery pack, it is ensured that the gas is discharged smoothly, thereby improving the safety performance.

Some embodiments of the present application further provide the electric vehicle. The electric vehicle includes the chassis and the battery pack in any embodiment, the battery pack is mounted to the chassis, and the free end of the exhaust pipe in the battery pack explosion-proof structure passes through the chassis and disposed on the side of the chassis away from the battery pack. The electric vehicle adopts the preceding battery pack so that when the battery pack is in danger, for example, on fire, the explosion-proof valve can open to discharge the gas from the lower part of the chassis. Additionally, the exhaust structure of the battery pack is less prone to be damaged, thereby ensuring the safety performance of the electric vehicle during the gas overflow in the battery pack.

### BRIEF DESCRIPTION OF THE DRAWINGS

FIG. 1 is a structural view one of a battery pack explosion-proof structure according to some implementations of the present application;
FIG. 2 is a structural view two of a battery pack explosion-proof structure according to some implementations of the present application;
FIG. 3 is a sectional view taken along A-A in FIG. 2 according to some implementations of the present application;
FIG. 4 is a sectional view of the structure in FIG. 3 with a first sealing member added;
FIG. 5 is a structural view one of an explosion-proof valve according to some implementations of the present application;
FIG. 6 is a structural view two of an explosion-proof valve according to some implementations of the present application; and
FIG. 7 is a schematic view showing the connection between a battery pack and an electric vehicle according to some implementations of the present application.

### Reference list

- 10: bottom cover plate
- 11: cover plate body
- 12: exhaust pipe
- 121: gas inlet
- 122: first channel
- 1221: step surface
- 123: second channel
- 124: third channel
- 20: explosion-proof valve
- 21: valve body assembly
- 211: valve body
- 2111: engaging hole
- 2112: accommodating groove
- 2113: threaded hole
- 212: support
- 2121: body
- 21211: valve port
- 2122: engaging portion
- 213: elastic sheet
- 22: explosion-proof film
- 23: second sealing member
- 30: first sealing member
- 40: retaining member
- 100: battery pack explosion-proof structure
- 200: printed circuit board (PCB)
- 300: battery pack
- 400: electric vehicle
- 410: chassis

### DETAILED DESCRIPTION

The present application is described below in conjunction with drawings and embodiments. The embodiments described herein are intended to illustrate the present application. For ease of description, part of structures related to the present application are illustrated in the drawings.

In the description of the present application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", or may refer to "connected directly", "connected indirectly through an intermediary", "connected inside two components", or an interaction relation between two components. For those of ordinary skill in the art, meanings of the preceding terms in the present application may be understood based on situations.

In the present application, unless otherwise expressly specified and limited, when a first feature is described as "on" or "under" a second feature, the first feature and the second feature may be in direct contact or may be in indirect contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is at a higher level than the second feature. When the first feature is described as "under", "below", or "underneath" the second feature, the first feature is right under, below, or underneath the second feature, the first feature is obliquely under, below, or underneath the second feature, or the first feature is at a lower level than the second feature.

In the description of this embodiment, orientations or position relations indicated by terms such as "upper", "lower", "left", and "right" are based on the drawings. These orientations or position relations are intended to facilitate description and simplify operations and not to indicate or imply that a device or element referred to must have such particular orientations or must be configured or operated in such particular orientations. In addition, the terms "first" and "second" are used for distinguishing between descriptions and have no special meanings.

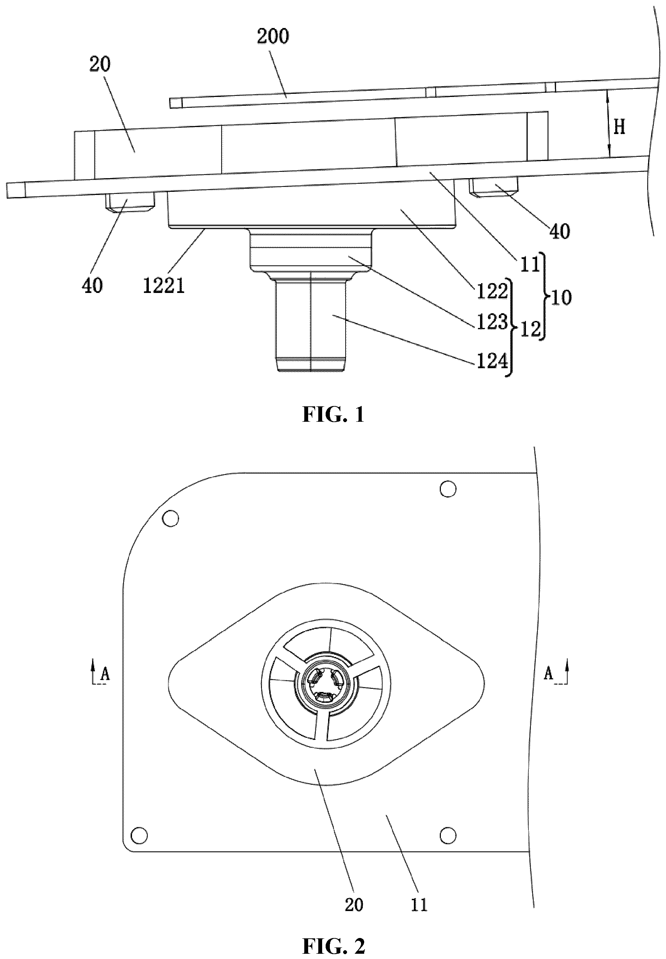

This embodiment provides a battery pack explosion-proof structure. As shown in FIGS. 1 to 3, the battery pack explosion-proof structure includes a bottom cover plate 10 and an explosion-proof valve 20. The bottom cover plate 10 includes a cover plate body 11 and an exhaust pipe 12. The cover plate body 11 and the exhaust pipe 12 are integrally formed. The exhaust pipe 12 is disposed on a side of the cover plate body 11 and extends in a direction away from the cover plate body 11. A gas inlet 121 of the exhaust pipe 12 is opened in the cover plate body 11. The explosion-proof valve 20 is connected to a side of the cover plate body 11 away from the exhaust pipe 12. A valve port 21211 of the explosion-proof valve 20 is directly opposite to the gas inlet 121 or is connected into the exhaust pipe 12.

In the battery pack explosion-proof structure in the preceding embodiment, the exhaust pipe 12 and the cover plate body 11 are integrally formed into the bottom cover plate 10, which means that a relatively long exhaust structure mounted to the explosion-proof valve 20 in the related art is integrated into the bottom cover plate 10. That is, the exhaust pipe 12 and the cover plate body 11 are made of the same material, generally a metal material. In a mounting process of the battery pack explosion-proof structure, the explosion-proof valve 20 is mounted on the cover plate body 11 so that the valve port 21211 of the explosion-proof valve 20 is directly opposite to or is connected into the exhaust pipe 12. Then, the bottom cover plate 10 mounted with the explosion-proof valve 20 is mounted to the chassis of a vehicle. In the mounting process, the exhaust pipe 12 is made of a harder material and therefore is less prone to deformation when bumping against the chassis. Thus, the exhaust pipe 12 is less prone to be damaged in the mounting process, thereby improving mounting reliability. In addition, it can be ensured that the explosion-proof valve 20 discharges the gas smoothly after failing, thereby improving safety performance.

Optionally, the bottom cover plate 10 is formed through die casting to have higher strength.

In some embodiments, the cover plate body 11 is connected to the periphery of the chassis through screws. Thus, without any snap or similar structure on the exhaust pipe 12, the exhaust pipe 12 can be prevented from being damaged due to the connection of the exhaust pipe 12 to the chassis.

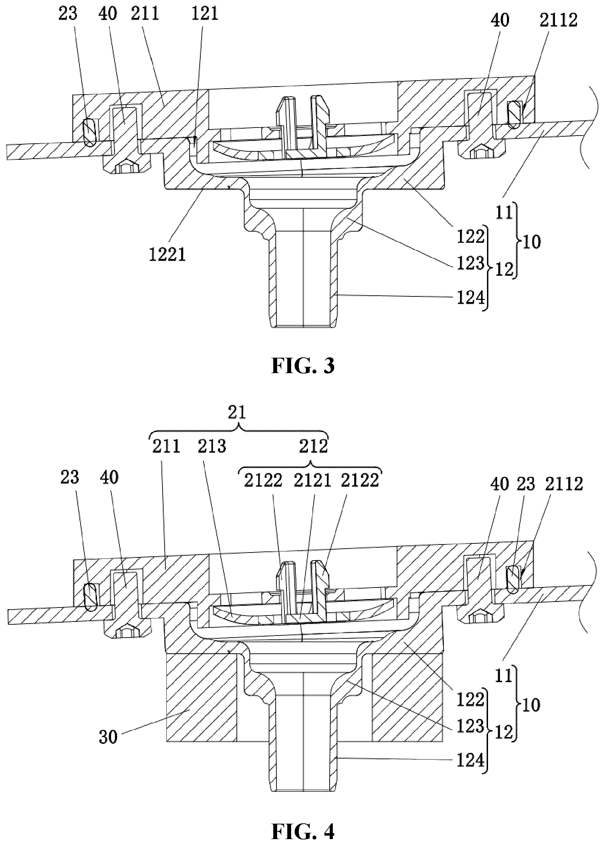

In some embodiments, as shown in FIGS. 3 and 4, the battery pack explosion-proof structure further includes a first sealing member 30. The exhaust pipe 12 is configured to pass through the chassis of the vehicle. The first sealing member 30 is configured to seal the exhaust pipe 12 with the chassis. With the preceding configuration, the sealing property between the cover plate body 11 and the chassis can be ensured. Once the valve port 21211 of the explosion-proof valve 20 opens and gas overflows from the exhaust pipe 12, it is ensured that the gas is discharged and prevented from entering the upper space of the chassis through a gap between the exhaust pipe 12 and the chassis. Furthermore, hazardous gases are prevented from entering the inside of the vehicle and harming human bodies.

In some embodiments, as shown in FIGS. 3 and 4, the exhaust pipe 12 includes a first channel 122 and a second channel 123. The first channel 122 is connected to the cover plate body 11. The second channel 123 communicates with an end of the first channel 122 facing away from the cover plate body 11. The outer diameter of the first channel 122 is greater than the outer diameter of the second channel 123 so that an end surface of the first channel 122 forms a step surface 1221. The battery pack explosion-proof structure further includes the first sealing member 30. The first sealing member 30 is annular and encircles the outside of the second channel 123. A first end of the first sealing member 30 is connected to the step surface 1221. A second end of the first sealing member 30 is configured to abut against the chassis. With the preceding configuration, the first sealing member 30 abuts against the step surface 1221 instead of a flat surface of the cover plate body 11. Thus, the deformation of the cover plate body 11 after mounting is reduced.

In another embodiment, the first sealing member 30 may be arranged in a sealing manner between the exhaust pipe 12 and the sidewall of a through hole opened in the chassis. That is to say, an end surface of the first sealing member 30 may not abut against the flat surface of the cover plate body 11 or a flat surface of the chassis, yet a sealing effect can also be achieved.

Optionally, the first sealing member 30 is made of ceramic foam that is resistant to high temperatures. The ceramic foam is relatively lightweight, prone to deformation, greatly airtight, and resistant to high temperatures.

In some embodiments, as shown in FIGS. 3 and 4, the end surface of the first sealing member 30 is bonded to the step surface 1221. The step surface 1221 is a finished surface. With the preceding configuration, the roughness of the step surface 1221 is reduced so that the step surface 1221 is bonded more easily through an adhesive. Optionally, the adhesive is a highly viscous back adhesive with a thickness of 0.15 millimeters (mm). In other embodiments, another material that can bond the first sealing member 30 may be used as the adhesive. The adhesive may have another thickness, and the user may flexibly set the thickness of the adhesive as appropriate.

After the cover plate body 11 is properly connected to the chassis, due to the elasticity of the first sealing member 30, the first sealing member 30 can act a better sealing function only if the first sealing member 30 is compressed. Referring to FIG. 4, after being compressed, the first sealing member 30 is subjected to a certain amount of deformation in the radiation direction. If the first sealing member 30 is excessively deformed outwards, the bonded end surface of the first sealing member 30 may be shifted relative to the step surface 1221, which is prone to a reduction in a local adhesive effect.

In some embodiments, as shown in FIGS. 3 and 4, the exhaust pipe 12 further includes a third channel 124 that communicates with the second channel 123. The outer diameter of the third channel 124 is less than the outer diameter of the second channel 123. The third channel 124 is partially located within the inner ring of the first sealing member 30. The first sealing member 30, the second channel 123 and the third channel 124 are spaced apart from one another. With the preceding configuration, referring to FIG. 4, after the first sealing member 30 is compressed and deformed, a sufficiently large gap exists between the inner side of the first sealing member 30 and the outer side of the outer wall of the second channel 123 and between the inner side of the first sealing member 30 and the outer side of the outer wall of the third channel 124. Thus, the space is sufficient for the first sealing member 30 to expand inwards. The extent to which the outer side of the first sealing member 30 expands outwards is minimized, thereby reducing the amount of the relative displacement between the first sealing member 30 and the step surface 1221 and ensuring the firmness of the adhesive between the two.

Additionally, the exhaust pipe 12 is provided with multiple sub-channels so that the overall strength of the exhaust pipe 12 can be improved, thereby preventing the exhaust pipe 12 from being damaged due to a bump in the mounting process.

In some embodiments, as shown in FIG. 3, corners of the inner wall of the exhaust pipe 12 are all chamfers. With the preceding configuration, the gas ejected from the explosion-proof valve 20 can be prevented from passing bending angles, thereby ensuring a smooth gas flow.

Optionally, as shown in FIGS. 4 to 6, the explosion-proof valve 20 includes a valve body assembly 21 and an explosion-proof film 22. The valve body assembly 21 is provided with the valve port 21211. The valve body assembly 21 is connected to the cover plate body 11 through a retaining member 40. The explosion-proof film 22 covers the valve port 21211 and is directly opposite to or located in the exhaust pipe 12. With the preceding configuration, the explosion-proof valve 20 and the cover plate body 11 can be connected to each other conveniently. When the gas pressure to which the explosion-proof valve 20 is subjected reaches a certain value, the explosion-proof film 22 is broken through, and the gas is ejected from the valve port 21211 into the exhaust pipe 12.

For example, the retaining member 40 is a screw. The cover plate body 11 is provided with a through hole. A threaded hole 2113 is provided on a side of the valve body assembly 21 facing the cover plate body 11. The screw is inserted through the through hole and threadedly connected to the threaded hole 2113. With this configuration, when viewed from the top of the cover plate body 11, no connecting member such as a screw exists on the appearance of the explosion-proof valve 20 so that the explosion-proof valve 20 is more aesthetic.

In other embodiments, the screw may be replaced with a combination of a bolt and a nut.

In some embodiments, as shown in FIGS. 4 to 6, the valve body assembly 21 includes a valve body 211, a support 212, and an elastic sheet 213. The valve body 211 is connected to the cover plate body 11 through the retaining member 40 and is provided with an engaging hole 2111. The support 212 includes a body 2121 and at least two engaging portions 2122 connected to the body 2121. The at least two engaging portions 2122 are inserted into the engaging hole 2111 and engaged with the valve body 211. The valve port 21211 is opened on the body 2121. The explosion-proof film 22 is configured to fit snugly on the body 2121. The elastic sheet 213 is annular. The inner periphery of the elastic sheet 213 encircles the support 212. The outer periphery of the elastic sheet 213 abuts against the valve body 211. With the preceding configuration, during the assembly of the explosion-proof valve 20, the at least two engaging portions 2122 are inserted into the engaging hole 2111. Under the action of the elasticity of the engaging portions 2122, side surfaces of the engaging portions 2122 abut against the sidewall of the engaging hole 2111 so that the position of the support 212 is fixed radially. Protrusions of the engaging portions 2122 abut against the upper side of the valve body 211, and the outer edge of the elastic sheet 213 abuts against the lower side of the valve body 211, thereby fixing the support 212 axially.

In this embodiment, three engaging portions 2122 are provided. A respective valve port 21211 is provided for a connecting end between each engaging portion 2122 and the body 2121. In other embodiments, two, four, or more engaging portions 2122 may be provided.

The elastic sheet 213 has elasticity and can be deformed to a certain extent to ensure the sealing property between the outer edge of the elastic sheet 213 and the valve body 211. Thus, it is ensured that the gas pressure can only act on the explosion-proof film 22 through the valve port 21211. Optionally, the elastic sheet 213 is made of silica gel. In other embodiments, the elastic sheet 213 may be made of another elastic material.

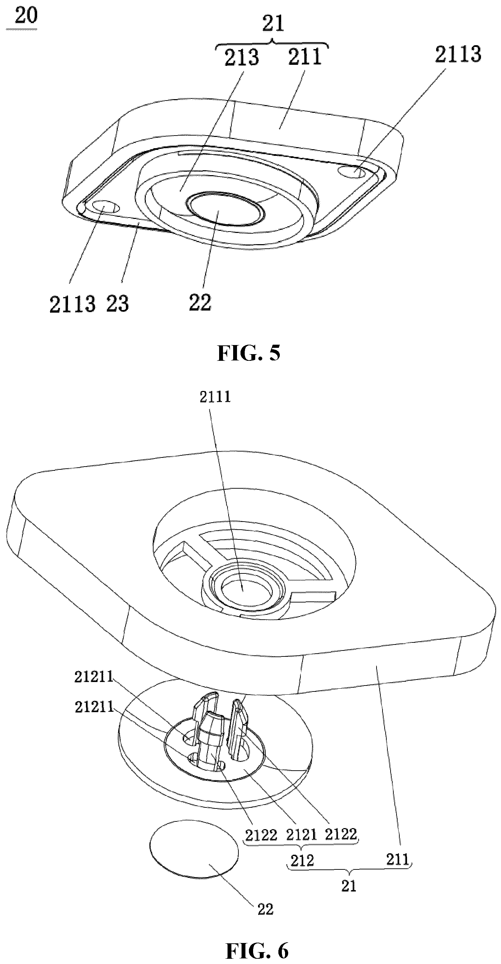

In some embodiments, as shown in FIGS. 4 and 5, the valve body assembly 21 or the cover plate body 11 is provided with an accommodating groove 2112. The accommodating groove 2112 is configured to accommodate a second sealing member 23 located between the valve body assembly 21 and the cover plate body 11. With the preceding configuration, the sealing property between the explosion-proof valve 20 and the bottom cover plate 10 can be ensured, and the gas is prevented from overflowing through a gap between the explosion-proof valve 20 and the bottom cover plate 10. In addition, the case where the explosion-proof film 22 is still not broken through even with an excessively large amount of gas in the battery pack is also prevented.

For example, the accommodating groove 2112 and the threaded hole 2113 are each opened on the valve body 211. In other embodiments, the accommodating groove 2112 may be opened on the cover plate body 11.

Optionally, the second sealing member 23 is made of soft silica gel, which has a longer service life, better corrosion resistance, and an excellent deformation property and ensures a sealing property.

Optionally, the valve body 211 is made of an aluminum alloy so that the weight of the explosion-proof valve 20 can be reduced.

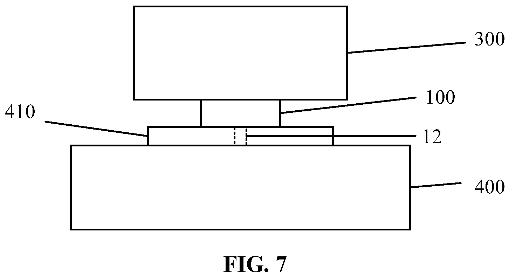

This embodiment further provides a battery pack 300. As shown in FIG. 7, the battery pack 300 includes the battery pack explosion-proof structure 100 in the preceding embodiment. The battery pack explosion-proof structure 100 is located in a lower portion of the battery pack 300. The battery pack 300 adopts the preceding battery pack explosion-proof structure 100 so that an exhaust structure is less prone to be damaged in the mounting process. When the gas overflows in the battery pack 300, it is ensured that the gas is discharged smoothly, thereby improving the safety performance.

Optionally, as shown in FIG. 1, the battery pack 300 further includes a PCB 200 disposed above the bottom cover plate 10. The spacing between the PCB 200 and the cover plate body 11 is denoted by H, and H ≤ 12 mm. The explosion-proof valve 20 is a flat explosion-proof valve. With the preceding configuration, the explosion-proof valve 20 can still be mounted in a relatively confined space required by a customer. The use of the space within the battery pack 300 is not affected, thereby meeting a customer requirement.

This embodiment further provides an electric vehicle 400. As shown in FIG. 7, the electric vehicle 400 includes the battery pack 300 in the preceding embodiment and the chassis 410. The battery pack 300 is mounted to the chassis 410. A free end (that is, the gas outlet end of the exhaust pipe 12) of the exhaust pipe 12 passes through the chassis 410 and disposed on a side of the chassis 410 away from the battery pack 300. The electric vehicle 400 adopts the preceding battery pack 300 so that when the battery pack 300 is in danger, for example, on fire, the explosion-proof valve 20 can open and the gas can be discharged from the lower portion of the chassis 410. Additionally, the exhaust structure of the battery pack 300 is less prone to be damaged, thereby ensuring the safety performance of the electric vehicle 400 during the gas overflow in the battery pack 300.

## Claims

1. A battery pack explosion-proof structure, comprising:
a bottom cover plate (10) comprising a cover plate body (11) and an exhaust pipe (12), wherein the cover plate body (11) and the exhaust pipe (12) are integrally formed, the exhaust pipe (12) is disposed on a side of the cover plate body (11) and extends in a direction away from the cover plate body (11), and a gas inlet (121) of the exhaust pipe (12) is opened in the cover plate body (11); and
an explosion-proof valve (20) connected to a side of the cover plate body (11) away from the exhaust pipe (12), wherein a valve port (21211) of the explosion-proof valve (20) is directly opposite to the gas inlet (121) or is connected into the exhaust pipe (12).

2. The battery pack explosion-proof structure according to claim 1, further comprising a first sealing member (30), wherein the exhaust pipe (12) is configured to pass through a chassis of a vehicle, and the first sealing member (30) is configured to seal the exhaust pipe (12) with the chassis.

3. The battery pack explosion-proof structure according to claim 2, wherein the exhaust pipe (12) comprises:
a first channel (122) connected to the cover plate body (11); and
a second channel (123) communicating with an end of the first channel (122) away from the cover plate body (11), wherein an outer diameter of the first channel (122) is greater than an outer diameter of the second channel (123) so that an end surface of the first channel (122) forms a step surface (1221);
wherein the first sealing member (30) is annular and encircles an outside of the second channel (123), a first end of the first sealing member (30) abuts against the step surface (1221), and a second end of the first sealing member (30) is configured to abut against the chassis.

4. The battery pack explosion-proof structure according to claim 3, wherein an end surface of the first sealing member (30) is bonded to the step surface (1221), and the step surface (1221) is a finished surface.

5. The battery pack explosion-proof structure according to claim 3 or 4, wherein the exhaust pipe (12) further comprises a third channel (124) that communicates with the second channel (123), an outer diameter of the third channel (124) is less than the outer diameter of the second channel (123), the third channel (124) is partially located within an inner ring of the first sealing member (30), and the first sealing member (30), the second channel (123) and the third channel (124) are spaced apart from one another.

6. The battery pack explosion-proof structure according to any one of claims 2 to 5, wherein each corner of an inner wall of the exhaust pipe (12) is configured to be a chamfer.

7. The battery pack explosion-proof structure according to any one of claims 1 to 6, wherein the explosion-proof valve (20) comprises:
a valve body assembly (21), wherein the valve port (21211) is opened on the valve body assembly (21), and the valve body assembly (21) is connected to the cover plate body (11) through a retaining member (40); and
an explosion-proof film (22) configured to cover the valve port (21211) and be directly opposite to or located in the exhaust pipe (12).

8. The battery pack explosion-proof structure according to claim 7, wherein the retaining member (40) comprises a screw, the cover plate body (11) is opened with a through hole, and a threaded hole (2113) is provided on a side of the valve body assembly (21) facing the cover plate body (11).

9. The battery pack explosion-proof structure according to claim 7 or 8, wherein the valve body assembly (21) or the cover plate body (11) is provided with an accommodating groove (2112), and the accommodating groove (2112) is configured to accommodate a second sealing member (23) located between the valve body assembly (21) and the cover plate body (11).

10. The battery pack explosion-proof structure according to claim 9, wherein both the accommodating groove (2112) and the threaded hole (2113) are opened on the valve body (211).

11. The battery pack explosion-proof structure according to any one of claims 7 to 10, wherein the valve body assembly (21) comprises:
a valve body (211), wherein the valve body (211) is connected to the cover plate body (11) through the retaining member (40) and provided with an engaging hole (2111);
a support (212), wherein the support (212) comprises a body (2121) and at least two engaging portions (2122) connected to the body (2121), the at least two engaging portions (2122) are inserted into the engaging hole (2111) and engaged with the valve body (211), the valve port (21211) is opened on the body (2121), and the explosion-proof film (22) is configured to attach to the body (2121); and
an elastic sheet (213) which is annular, wherein an inner periphery of the elastic sheet (213) encircles the support (212), and an outer periphery of the elastic sheet (213) abuts against the valve body (211).

12. The battery pack explosion-proof structure according to claim 11, wherein three engaging portions (2122) and three valve ports (21211) are provided, and a respective of the three valve ports (21211) is provided at a connecting end between each of the three engaging portions (2122) and the body (2121).

13. A battery pack, (300) comprising the battery pack explosion-proof structure (100) according to any one of claims 1 to 12, wherein the battery pack explosion-proof structure (100) is located at a lower portion of the battery pack (300).

14. The battery pack (300) according to claim 13, further comprising a printed circuit board (200) disposed above the bottom cover plate (10), wherein a spacing between the printed circuit board (200) and the cover plate body (11) is denoted by H, H ≤ 12 mm, and the explosion-proof valve (20) is a flat explosion-proof valve.

15. An electric vehicle, (400) comprising a chassis (410) and the battery pack (300) according to claim 13 or 14, wherein the battery pack (300) is mounted to the chassis (410), and a free end of the exhaust pipe (12) is inserted through the chassis (410) and disposed on a side of the chassis (410) away from the battery pack (300).
